(19)

Europäisches Patentamt
European Patent Office
Office européen des brevets

(11) **EP 3 372 956 A2**

(12) **EUROPEAN PATENT APPLICATION**

(43) Date of publication:
**12.09.2018 Bulletin 2018/37**

(51) Int Cl.:
*G01C 19/5733* (2012.01)    *G01C 19/5726* (2012.01)

(21) Application number: **18152373.9**

(22) Date of filing: **18.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **06.03.2017  US 201715450616**

(71) Applicant: **NXP USA, Inc.**
**Austin TX 78735 (US)**

(72) Inventor: **GEISBERGER, Aaron A.**
**5656 AG Eindhoven (NL)**

(74) Representative: **Pomper, Till**
**NXP Semiconductors**
**Intellectual Property Group**
**134 avenue Eisenhower**
**BP 72329**
**31023 Toulouse Cedex 1 (FR)**

(54) **MEMS DEVICE WITH IN-PLANE QUADRATURE COMPENSATION**

(57)    A MEMS device includes a mass system capable of undergoing oscillatory drive motion along a drive axis and oscillatory sense motion along a sense axis perpendicular to the drive axis. A quadrature compensation unit includes fixed and movable electrodes, each being lengthwise oriented along the drive axis. The movable electrode is coupled to the mass system. The fixed electrode has a first edge exhibiting a first stepped profile and the movable electrode has a second edge facing the first edge, the second edge exhibiting a second stepped profile. The fixed and movable electrodes are positioned in an immediately adjacent configuration such that when the movable electrode is not undergoing oscillatory motion, a gap between the first and second edges has a varying width corresponding to the first and second stepped edge profiles.

*FIG. 1*

**Description**

**TECHNICAL FIELD OF THE INVENTION**

The present invention relates generally to microelectromechanical systems (MEMS) devices. More specifically, the present invention relates to in-plane quadrature compensation for a MEMS device, such as an angular rate sensor.

**BACKGROUND OF THE INVENTION**

Microelectromechanical systems (MEMS) technology has achieved wide popularity in recent years, as it provides a way to make very small mechanical structures and integrate these structures with electrical devices on a single substrate using conventional batch semiconductor processing techniques. One common application of MEMS is the design and manufacture of sensor devices. MEMS sensor devices are widely used in applications such as automotive, inertial guidance systems, household appliances, game devices, protection systems for a variety of devices, and many other industrial, scientific, and engineering systems. One example of a MEMS sensor is a MEMS angular rate sensor. Alternatively referred to as a "gyroscope", "gyrometer," "vibratory rate gyroscopes," "gyroscope sensor," or "yaw rate sensor," an angular rate sensor senses angular speed or velocity around one or more axes.

In vibratory angular rate sensors, an inherent problem is the existence of undesirable interference signals, referred to as quadrature motion or quadrature error. Quadrature motion is defined as the direct coupling of the drive mode displacement to the sense mode of the angular rate sensor. Typically, quadrature motion occurs in vibrating angular rate sensors due to manufacturing imperfections that permit the sense mass to oscillate relative the sense axis in response to the drive mode displacement. This oscillation can be confused with Coriolis acceleration and subsequently the rotation rate. Quadrature motion can result in offset error, reduced dynamic range, and increased noise for the device. A large quadrature error can even cause a device to rail (i.e., the front-end circuit has too much input signal) which renders the device unusable or forces the input range on the front-end to be large which decreases the device noise performance. Accordingly, the introduction of MEMS angular rate sensors into the high-precision, low power consumption market has been problematic due at least in part to error sources, such as quadrature motion.

**BRIEF DESCRIPTION OF THE DRAWINGS**

The accompanying figures in which like reference numerals refer to identical or functionally similar elements throughout the separate views, the figures are not necessarily drawn to scale, and which together with the detailed description below are incorporated in and form part of the specification, serve to further illustrate various embodiments and to explain various principles and advantages all in accordance with the present invention.

FIG. 1 shows a generalized block diagram of a MEMS device in the form of a sensor package that includes an angular rate sensor in electrical communication with a control circuit 24 in accordance with an embodiment;
FIG. 2 shows an enlarged partial top view of the angular rate sensor delineated in FIG. 1 by a dashed line box;
FIG. 3 shows the partial top view of the angular rate sensor of FIG. 2 in which a movable mass system is undergoing oscillatory drive motion; and
FIG. 4 shows the partial top view of the angular rate sensor of FIG. 2 in which the movable mass system is undergoing oscillatory drive motion in a direction opposing that shown in FIG. 3.

**DETAILED DESCRIPTION**

In overview, the present disclosure concerns a microelectromechanical systems (MEMS) device, and more particularly, an angular rate sensor, in which a quadrature compensation unit is implemented to null or otherwise compensate for quadrature motion. More particularly, various inventive concepts and principles embodied in the MEMS device enables an increase in the actuation density of the in-plane quadrature electrode through the implementation of nested electrodes having a stepped edge profile. The stepped edge profile of the side walls of fixed and movable electrodes enables the generation of quadrature compensation force in an area efficient form factor.

The instant disclosure is provided to further explain in an enabling fashion the best modes, at the time of the application, of making and using various embodiments in accordance with the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

It should be understood that the use of relational terms, if any, such as first and second, top and bottom, and the like are used solely to distinguish one from another entity or action without necessarily requiring or implying any actual such relationship or order between such entities or actions. Furthermore, some of the figures may be illustrated using various shading and/or hatching to distinguish the different elements produced within the various structural layers. These different elements within the structural layers may be produced utilizing current and upcoming microfabrication techniques of depositing, patterning, etching, and so forth. Accordingly, although different shading and/or hatching is utilized in the illustrations, the different elements within the structural layers may be formed out of the same material.

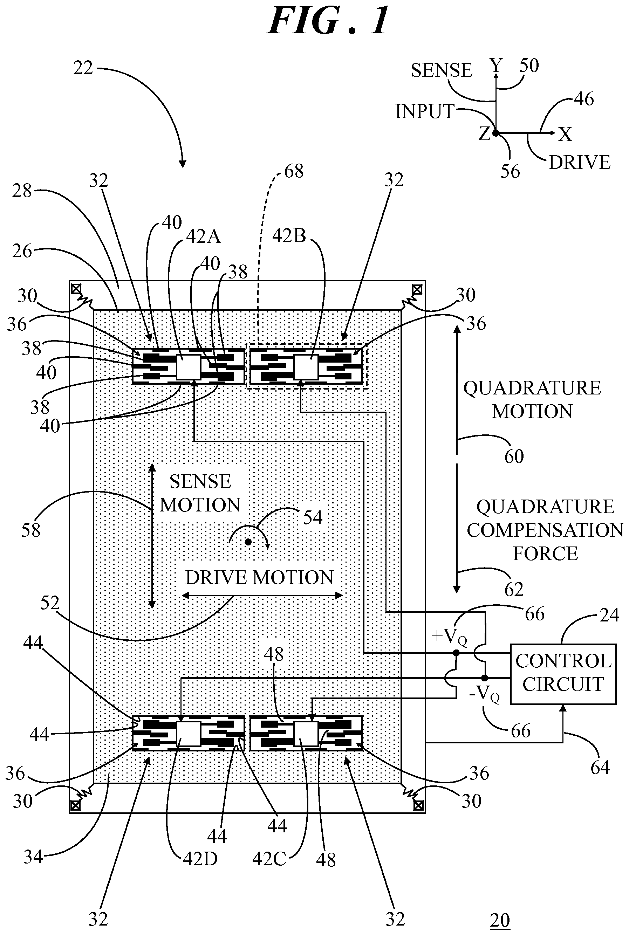

Referring to FIG. 1, FIG. 1 shows a generalized block diagram of a MEMS device in the form of a sensor package 20 that includes an angular rate sensor 22 in electrical communication with a control circuit 24 in accordance with an embodiment. In general, angular rate sensor 22 includes a movable mass system 26 flexibly coupled to a substrate 28 via anchored flexures 30. Angular rate sensor 22 further includes a quadrature compensation unit 32. Movable mass system 26 includes a movable body portion 34 (illustrated using stippled shading) and at least one opening 36 extending through movable body portion 34. In the illustrated example, movable body portion 34 includes four openings 36. However, other embodiments may include less than or more than four openings 36. In still other embodiments, movable body portion 34 may not have openings 36 extending through it.

Quadrature compensation unit 32 includes fixed electrodes 38 and movable electrodes 40 residing in openings 36. Further, movable electrodes 40 are positioned in alternating arrangement with fixed electrodes 38. In this example, fixed electrodes 38 extend from anchor structures 42A, 42B, 42C, 42D residing in each opening 36, in which anchor structures 42A, 42B, 42C, 42D are coupled to substrate 28. Movable electrodes 40 are formed along an inner perimeter 44 of each opening 36 and/or extend from inner perimeter 44 into each opening 36. Thus, movable electrodes 40 are movable relative to fixed electrodes 38. In the illustrated example, fixed and movable electrodes 38 40 are lengthwise oriented in a first direction corresponding to an X-axis 46 in a three-dimensional coordinate system. Additionally, movable electrodes 40 are laterally spaced apart by adjacent fixed electrodes 38 by gaps 48 in a second direction corresponding to a Y-axis 50 that is perpendicular to X-axis 46. In this illustration only fixed and movable electrodes 38, 40 surrounding anchor structure 42A are labeled. However, each of anchor structures 42B, 42C, 42D also have associated fixed and movable electrodes 38, 40 arranged similarly to those associated with anchor structure 42A.

To operate angular rate sensor 22, a drive system (not shown for simplicity of illustration) in communication with movable mass system 26 enables oscillatory drive motion as represented by a bi-directional arrow 52, of movable mass system 26 substantially parallel to a drive axis, which in this example is X-axis 46. Thus, X-axis 46 may alternatively be referred to herein as drive axis 46. Oscillatory drive motion 52 of movable mass system 26 may be kept constant to maintain constant sensitivity of angular rate sensor 22. Additionally or alternatively, the frequency of oscillation can be locked to the mechanical resonance of movable mass system 26 to minimize drive power.

Once movable mass system 26 is put into oscillatory drive motion 52 parallel to drive axis 46, it is capable of detecting an angular rate, i.e., angular velocity as represented by a curved arrow 54, induced by angular rate sensor 22 being rotated about an axis of rotation, referred to herein as an input axis. In this example, the input axis is the Z-axis 56 in a three-dimensional coordinate system. Thus, Z-axis 56 may alternatively be referred to herein as an input axis 56 in connection with angular rate sensor 22. As angular rate sensor 22 experiences angular velocity 54 about input axis 56, movable mass system 26 (or at least a sense portion of movable mass system 26) undergoes oscillatory sense motion, represented by a bi-directional arrow 58, substantially parallel to a sense axis, which in this example, is Y-axis 50. Thus, Y-axis 50 may alternatively be referred to herein as sense axis 50 in connection with angular rate sensor 22. In particular, a Coriolis acceleration occurs relative to sense axis 50, which is perpendicular to both drive axis 46 and input axis 56. The Coriolis acceleration causes generally in-plane linear oscillatory sense motion 58 of movable mass system 26 parallel to sense axis 50. This linear oscillatory sense motion 58 has an amplitude that is proportional to angular velocity 54 of angular rate sensor 22 about input axis 56. Oscillatory sense motion 58 can be detected as changes in capacitance between fixed and movable sense electrodes of a sense system (not shown for simplicity) as known to those skilled in the art.

Movable mass system 26 is represented in greatly simplified form. It should be understood, however, that movable mass system 26 can include a great variety of shapes and configurations. For example, movable mass system 26 may include one or more drive masses suitably interconnected with one or more sense masses, where the sense mass(es) together with the drive mass(es) undergo oscillatory drive motion 52, and the sense mass(es) undergo oscillatory sense motion 58 in response to angular velocity 54. Alternatively, movable mass system 26 may include a single mass flexibly coupled to substrate 28 that can undergo oscillatory drive motion 52 and undergo oscillatory sense motion 58 in response to angular velocity 54.

As mentioned previously, movable mass system 26 may undergo quadrature motion, represented by an arrow 60. Quadrature motion 60 of movable mass system 26 can be a result of signal leakage from drive axis 46 to sense axis 50 caused by mass and spring imbalance due to manufacturing imperfections, anisoelastic coupling, and so forth. This quadrature motion 60 can result in a quadrature error signal that can be as large as thousands of degrees per second and can be ninety degrees out of phase with the Coriolis acceleration. Demodulation can eliminate some of the error component resulting from the quadrature motion 60. However, a small phase error may still overwhelm a sense loop circuit.

Accordingly, quadrature compensation unit 32 may be implemented with angular rate sensor 22 in order to apply an electrostatic force, referred to herein as a quadrature compensation force and represented by an arrow 62, via fixed and movable electrodes 38, 40 in opposite phase relation to quadrature motion 60. Quadrature compensation force 62 is applied to compensate for, or otherwise null, quadrature motion 60. The arrow representing quadrature compensation force 62 is oriented in a direction opposite to that of the arrow representing quadrature motion 60 in order to emphasize the opposite phase relation. It should be understood, however, that quadrature motion 60 is an oscillatory motion. Therefore, quadrature compensation force 62 is an oscillatory motion in opposite phase relation to the oscillatory quadrature motion 60.

Control circuit 24 may be adapted to receive an output signal 64, a portion of which includes a quadrature motion signal component. In some embodiments, control circuit 24 may be adapted to determine a magnitude of quadrature motion 60 imposed on sense axis 50 from oscillatory drive motion 52 applied to drive axis 46. Control circuit 24 may then apply a corrective voltage, i.e., a quadrature voltage 66 (labeled $+V_Q$ and $-V_Q$), to fixed electrodes 38 of quadrature compensation unit in order to generate quadrature compensation force 62 that is sufficient to null or otherwise compensate for quadrature motion 60.

A gyroscope equation of motion with off-diagonal terms is represented, as follows:

$$\begin{bmatrix} m_d & 0 \\ 0 & m_s \end{bmatrix} \begin{bmatrix} \ddot{x} \\ \ddot{y} \end{bmatrix} + \begin{bmatrix} c_x & 0 \\ 0 & c_y \end{bmatrix} \begin{bmatrix} \dot{x} \\ \dot{y} \end{bmatrix} + \begin{bmatrix} k_x & k_{xy} \\ k_{yx} & k_y \end{bmatrix} \begin{bmatrix} x \\ y \end{bmatrix} = \begin{bmatrix} F_d \\ -2m_c\Omega_z\dot{x} \end{bmatrix} \qquad (1)$$

which yields the following:

$$m_s\ddot{y} + c_y\dot{y} + k_yy = -2m_c\Omega_z\dot{x} - k_{yx}x \qquad (2)$$

In the equations presented above, $F_d$ is the drive force needed to enable oscillatory drive motion 52 of movable mass system 26, where $m_d$ is the mass of the drive mass portion of movable mass system 26, $c_x$ is the damping coefficient in the drive (x) direction, $k_x$ is the spring constant in the drive direction, $k_{xy}$ is the spring constant cross-coupling force on sense axis (y) 50 that may cause displacement along drive axis (x) 46, $\ddot{x}$ is acceleration in the drive direction, $\dot{x}$ is velocity in the drive direction, and x is the drive displacement. Additionally, $m_s$ is the mass of the sense mass portion of movable mass system 26, $c_y$ is the damping coefficient in the sense (y) direction, $k_y$ is the spring constant in the sense direction, $k_{yx}$ is the spring constant cross-coupling force on drive axis (x) 46 that may cause displacement along sense axis (y) 50, $\ddot{y}$ is acceleration in the sense direction, $\dot{y}$ is velocity in the sense direction, and y is the sense displacement.

In equation (2), the righthand side of the equation reveals that sense motion 58 is a function of $m_c$, $\Omega_z$ and $\dot{x}$, where $m_c$ is the mass of the "Coriolis mass" (i.e., the sense mass portion upon which Coriolis acceleration is being imposed upon), $\Omega_z$ is angular velocity 54 about input axis (z) 56, and $\dot{x}$ is the velocity in the drive direction. Additionally, quadrature motion 60 is a function of $k_{yx}$ and x, where $k_{yx}$ is the spring constant cross-coupling force on sense axis (y) 50 from drive axis (x) 46 and x is the drive displacement. Thus, a time varying force that is in phase with oscillatory drive motion 52 is needed to cancel quadrature motion 60, represented by $k_{yx}x$ in equation (2).

Quadrature compensation force 62 needed to cancel quadrature motion 60 can be characterized by the following equations:

$$E = \frac{1}{2}CV^2 = \frac{1}{2}\left[C_0 + N\varepsilon\frac{xh}{y}\sin(\omega_d t)\right](V_{pm} - V_q)^2 \qquad (3)$$

and

$$F_q = -\frac{\partial E}{\partial y} \propto \varepsilon h V_{pm}\frac{NV_q}{y_o^2}x \qquad (4)$$

In the equations presented above, E is the energy of a capacitor, C is capacitance, and V is voltage. Further, $C_0$ is static capacitance, N is the total overlap area of fixed and movable electrodes 38, 40, $\varepsilon$ is permittivity of the free space, h is the structural thickness, y is the displacement along sense axis 50, $\sin(\omega_d t)$ is the drive motion, $\omega_d$ is the drive frequency, t is time, $V_{pm}$ is the voltage potential of the drive mass portion of movable mass system 26, and $V_q$ is the voltage applied to each of fixed electrodes 38.

In equation (4), $F_q$ represents quadrature compensation force 62, i.e., the electrostatic force needed to compensate for or null quadrature motion 60. Quadrature compensation force 62 is a function of the partial derivative of the energy of a capacitor and the partial derivative of the displacement along sense axis 50. Thus, quadrature compensation force 62 is proportional to the product of the permittivity of free space ($\varepsilon$), the structural thickness (h), the voltage potential of the drive mass portion of movable mass system 26 ($V_{pm}$), displacement along drive axis 46 (x), and a fraction in which the numerator is a product of the overlap area (N) of fixed and movable electrodes 38, 40 and the voltage applied to each of fixed electrodes 38 ($V_q$) and the denominator is the square of the width ($y_0$) of the gap between fixed and movable electrodes 38, 40. As such, quadrature compensation force 62 is proportional to the overlap area (N) and is inversely proportional to the square of the width ($y_0$) of the gap between fixed and movable electrodes 38, 40. Consequently, the total overlap area (N) and the width ($y_0$) of the gaps between fixed and movable electrodes 38, 40 are significant contributors to the amount of quadrature compensation force 62 that can be produced.

While application of quadrature compensation force ($F_q$) 62 can suppress quadrature motion 60, this technique requires relatively a large voltage ($V_q$) and large overlap area (N) for quadrature compensation electrodes (e.g., fixed and movable electrodes 38, 40). Further, although the net quadrature compensation force 62 increases quadratically by decreasing the width of gaps 48, the width ($y_0$) of the gaps 48 is limited by the minimum allowable spacing between fixed and movable electrodes 38, 40 (i.e., minimum-gap requirement) of the fabrication process employed to fabricate fixed and movable electrodes 38, 40. A minimal size, i.e., overall area, of a MEMS device is additionally a critical factor in the design of such devices. As will be discussed in significantly greater detail below, angular rate sensor 22 includes quadrature compensation unit 32 that effectively maximizes the overlap area (N) in order to enhance the actuation density (i.e., quadrature compensation force 62) in an area efficient form factor and without breaking the design rules of minimum allowable spacing.

In some embodiments, anchor structures 42A, 42C may be designated for application of quadrature voltage 66 (labeled $+V_Q$) to their respective attached fixed electrodes 38 and anchor structures 42B, 42D may be designated for application of quadrature voltage 66 (labeled $-V_Q$) to their respective attached fixed electrodes 38. Accordingly, a time varying quadrature compensation force 62 may be provided to null or otherwise compensate for quadrature motion 60 of the sense mass portion of movable mass system 26. More particularly, quadrature voltage 66 is considered to be fixed (e.g., equation (4)) such that the time varying quadrature compensation force 62 is generated via oscillatory drive motion 52. Although, quadrature voltage 66 is considered to be fixed, it should be understood that in some configurations, quadrature voltage 66 may fluctuate during device operation as control loops adjust to keep quadrature motion at a minimum. In general, quadrature voltage 66 applied to fixed electrodes 38 is understood to mean a relative voltage bias between fixed and movable electrodes 38, 40, since movable electrodes 40 are typically placed at a non-zero potential.

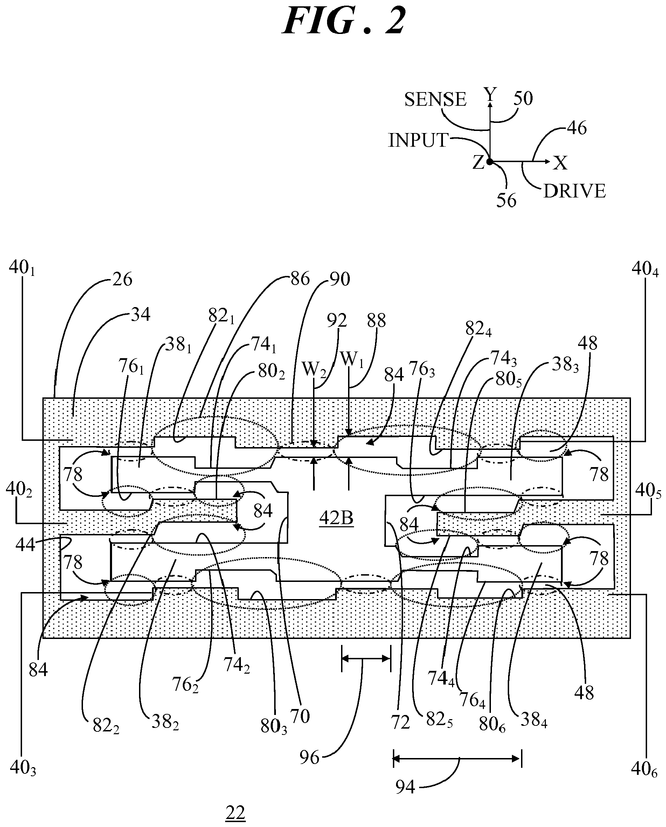

Referring concurrently to FIGs. 1 and 2, FIG. 2 shows an enlarged partial top view of angular rate sensor 22 delineated by a dashed line box 68 in FIG. 1. The partial view of angular rate sensor 22 in FIG. 2 shows anchor structure 42B residing in one of openings 36 extending through movable body portion 34 of movable mass system 26. FIG. 2 represents a condition in which movable mass system 26 is not undergoing oscillatory drive motion 52. Although the following discussion is directed to one of anchor structures 42B and its associated fixed and movable electrodes 38, 40, it should be understood that the following discussion applies equivalently to the remaining anchor structures 42A, 42C, 42D and their associated fixed and movable electrodes 38, 40.

In the enlarged top view of FIG. 2, multiple (e.g., two) fixed electrodes $38_1$ and $38_2$ extend from a first side 70 of anchor structure 42B. Similarly, multiple (e.g., two) fixed electrodes $38_3$ and $38_4$ extend from a second side 72 of anchor structure 42B. Fixed electrodes $38_1$, $38_2$, $38_3$, and $38_4$ are generally lengthwise oriented in a first direction corresponding to drive (X) axis 46. Fixed electrodes $38_1$ and $38_2$ are laterally displaced away from one another in a second direction corresponding to sense (Y) axis 50, and fixed electrodes $38_3$ and $38_4$ are laterally displaced away from one another in the second direction corresponding to sense (Y) axis 52. Thus, fixed electrodes $38_1$, $38_2$, $38_3$, and $38_4$ extend as fixed fingers from opposing sides 70, 72 of anchor structure 42B. For clarity, subscripts "1," "2," "3," and so forth are utilized herein to differentiate certain similar components from one another.

Additionally, in the enlarged top view of FIG. 2, multiple (e.g., three) movable electrodes $40_1$, $40_2$, $40_3$ are displaced away from one another in the second direction corresponding to sense (Y) axis 50. Movable electrodes $40_1$, $40_2$, $40_3$ are positioned in alternating arrangement with fixed electrodes $38_1$, $38_2$. Similarly, multiple (e.g., three) movable electrodes $40_4$, $40_5$, $40_6$ are displaced away from one another in the second direction corresponding to sense (Y) axis 50. Movable electrodes $40_4$, $40_5$, $40_6$ are positioned in alternating arrangement with fixed electrodes $38_3$, $38_4$. In some embodiments, movable electrodes $40_1$, $40_3$, $40_4$, $40_6$ are formed along (i.e., are formed as part of) inner perimeter 44 of opening 36. Hence, movable electrodes $40_1$ and $40_4$ are generally contiguous with one another. Likewise, movable electrodes $40_3$ and $40_6$ are generally contiguous with one another. However, movable electrodes $40_2$, $40_5$ extend from inner perimeter 44 and into opening 36 as movable fingers.

In accordance with an embodiment, each fixed electrode $38_1$, $38_2$, $38_3$, and $38_4$ has at least one edge 74, 76 (and differentiated by subscripts "1," "2," "3," and "4") having a stepped edge profile 78. Likewise, each movable electrode $40_1$, $40_2$, $40_3$, $40_4$, $40_5$, $40_6$ has at least one edge 80, 82 (and differentiated by subscripts "1," "2," "3," and so forth) having a stepped edge profile 84. The phrase "stepped edge profile" refers to an edge that has steplike sections such that the edge is not generally straight or even. These steplike sections extend laterally in the second direction corresponding to sense (Y) axis 50. In this example, the stepped edge profile results in sections of the associated electrodes $38_1$, $38_2$, $38_3$, $38_4$, $40_1$, $40_2$, $40_3$, $40_4$, $40_5$, $40_6$ that extend toward the immediately adjacent electrode 38i, $38_2$, $38_3$, $38_4$, 40i, $40_2$, $40_3$, $40_4$, $40_5$, $40_6$ in an overlapping or nested manner when movable mass system 26 including movable electrodes 40 is not undergoing oscillatory drive motion 52 (represented in FIG. 1).

Thus, in the illustrated configuration, fixed electrode $38_1$ having fixed electrode edges $74_1$, $76_1$ exhibiting stepped edge profile 78 is interposed between movable electrode $40_1$ having movable electrode edge $82_1$ and movable electrode $40_2$ having movable electrode edge $80_2$, where each of movable electrode edges $82_1$, $80_2$ exhibit stepped edge profile 84. Further, movable electrode $40_2$ is interposed between fixed electrode $38_1$ and fixed electrode $38_2$. However, fixed electrode edge $74_2$ of fixed electrode $38_2$ is generally straight and therefore does not exhibit stepped edge profile 78. And still further, fixed electrode $38_2$ is interposed between movable electrode $40_2$ having movable electrode edge $82_2$ and movable electrode $40_3$ having movable electrode edge $80_3$, where each of movable electrode edges $82_2$, $80_3$ exhibit stepped edge profile 84. Of course, it should be apparent that fixed electrodes $38_3$, $38_4$ and movable electrodes $40_4$, $40_5$, $40_6$ share a similar geometrical configuration as fixed electrodes $38_1$, $38_2$ and movable electrodes $40_1$, $40_2$, $40_3$. A total of four fixed electrodes $38_1$, $38_2$, $38_3$, $38_4$ and six movable electrodes $40_1$, $40_2$, $40_3$, $40_4$, $40_5$, $40_6$ are shown and described. It should be understood, however, that alternative configurations may have more than or less than the quantity of fixed and movable electrodes described herein.

The stepped edge profiles 78, 80 of corresponding fixed and movable electrodes 38, 40 results in multiple gaps 48 between fixed and movable electrode edges 74, 82 of fixed and movable electrodes 38, 40 and between fixed and movable electrode edges 76, 80 having varying widths corresponding to stepped edge profiles 78, 80. In this example, gaps 48 include multiple first regions 86, denoted by dotted line ovals, exhibiting a first width 88, labeled $W_1$, and multiple second regions 90, denoted by dash-dot ovals, exhibiting a second width 92, labeled $W_2$, in which second width 92 is less than first width 88.

Given that fixed and movable electrodes 38, 40 reside in an immediately adjacent alternating arrangement when movable mass system 26 is not undergoing oscillatory drive motion 52, first and second widths 88, 92 at first and second regions 86, 90 are subject to constraints defined by a fabrication process, such as a deep reactive ion etch (DRIE) process, used to form fixed and movable electrodes 38, 40. Thus, each of first and second widths 88, 92 is no less than a minimum allowable spacing defined by the fabrication process used to form fixed and movable electrodes 38, 40. Accordingly, the minimum requirements for first and second widths 88, 92 are not violated during the fabrication process.

However, the multiple second regions 90 having the smaller second width 92 may significantly increase the overlap area (N) between fixed and movable electrodes 38, 40 in order to enhance actuation density and thereby effectively provide quadrature compensation force 62 (FIG. 1). Indeed, review of the dash-dot ovals representing second regions 90 exhibiting the smaller second width 92 readily reveals ten edges that can be effective for generating quadrature compensation force 62 (FIG. 1). In accordance with stepped edge profiles 78, 84, a first length 94 of first regions 86 exhibiting first width 88 varies in correspondence with oscillatory drive motion 52. Likewise, a second length 96 of second regions 90 exhibiting second width 92 varies in correspondence with oscillatory drive motion 52. That is, as movable mass system 26 oscillates, first and second lengths 94, 96 increase and decrease in correspondence with the oscillatory drive motion 52 (FIG. 1) of movable electrodes 40, thereby effecting the magnitude and direction of the applied quadrature compensation force 62.

Although the above presented description provides fixed and movable electrodes for quadrature compensation, additionally, or alternatively, in some embodiments the fixed and movable electrodes that may be implemented within a drive system (not shown) or a sense system (not shown) of angular rate sensor 22 may also include stepped edge profiles, similar to profiles 78, 84. In such configurations, capacitance enhancement may be achieved in order to minimize the drive actuation voltage and/or to maximize the sensing capacitance.

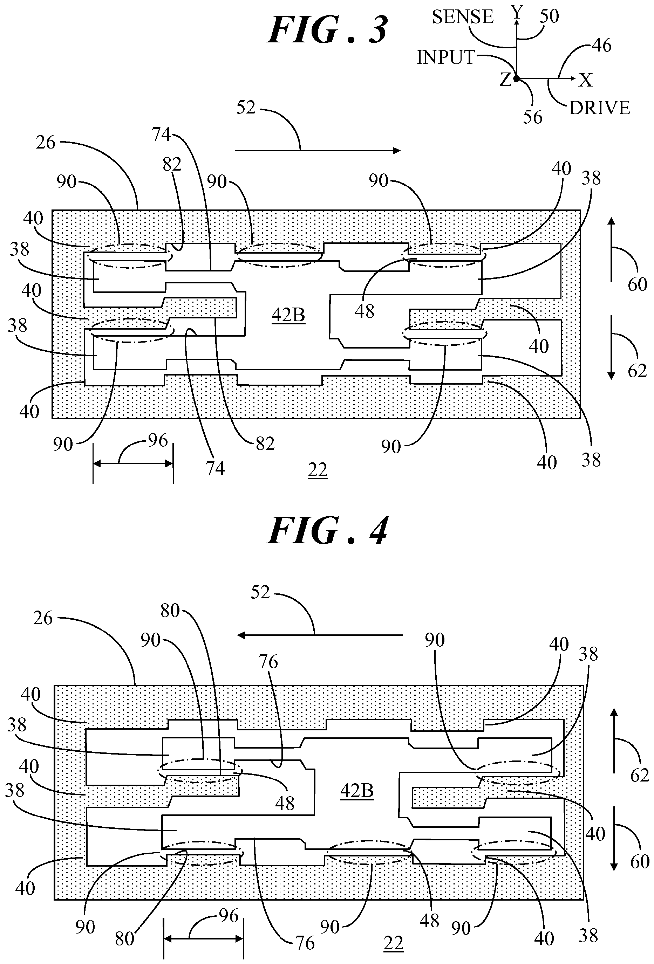

Now referring to FIGs. 3 and 4, FIG. 3 shows the partial top view of the angular rate sensor 22 of FIG. 2 in which movable mass system 26 including movable electrodes 40 is undergoing oscillatory drive motion 52. In this illustration, movable mass system 26 has moved in a rightward direction relative to the page on which FIG. 3 is presented. Similarly, FIG. 4 shows the partial top view of angular rate sensor 22 in which movable mass system 26 including movable electrodes 40 is undergoing oscillatory drive motion 52 in a direction opposing that shown in FIG. 3. As such, in FIG. 4, movable mass system 26 has moved in a leftward direction relative to the page on which FIG. 4 is presented. Each of FIGs. 3 and 4 represents an extreme position of movable mass system 26 to demonstrate correction of quadrature motion 60 via application of quadrature compensation force 62 generated at second regions 90 having the smaller second width 92.

As shown in FIG. 3, oscillatory drive motion 52 results in an alignment of certain portions of fixed electrode edges 74 of fixed electrodes 38 with movable electrode edges 82 of movable electrodes 38 to effectively increase second lengths 96 of second regions 90 having the smaller second width 92. Accordingly, multiple (e.g., five) second regions 90 of relatively greater second length 96 effectively increases the overlap area (N) in order to provide quadrature compensation force 62 (oriented in a negative "Y" direction) to compensate for quadrature motion 60 (oriented in positive "Y" direction) relative to sense axis 50.

As further shown in FIG. 4, oscillatory drive motion 52 results in an alignment of certain portions of fixed electrode edges 76 of fixed electrodes 38 with movable electrode edges 80 of movable electrodes 38 to effectively increase second lengths 96 of second regions 90 having the smaller second width 92. Accordingly, multiple (e.g., five) second regions 90 of relatively greater second length 96 effectively increases the overlap area (N) in order to provide quadrature compensation force 62 (oriented in a positive "Y" direction) to compensate for quadrature motion 60 (oriented in negative "Y" direction) relative to sense axis 50. The immediately adjacent fixed and movable electrodes 38, 40 formed in an overlapping or nested manner ensures that fixed and movable electrodes 38, 40 with variable gap width ensures high actuation density in an area efficient manner while producing a linear quadrature force response.

Embodiments described herein comprise microelectromechanical systems (MEMS) devices, such as angular rate sensors, in which a quadrature compensation unit is implemented to null or otherwise compensate for quadrature motion. An embodiment of a MEMS device comprises a fixed electrode coupled to a substrate and lengthwise oriented in a first direction, the fixed electrode having a first edge, the first edge exhibiting a first stepped edge profile. The MEMS device further comprises a movable electrode coupled to a movable mass system, the movable electrode being lengthwise oriented in the first direction, the movable mass system and the movable electrode being configured to undergo oscillatory motion in the first direction, the movable electrode having a second edge facing the first edge, the second edge exhibiting a second stepped edge profile, wherein when the movable electrode is not undergoing the oscillatory motion, a gap between the first and second edges has a varying width corresponding to the first and second stepped edge profiles.

An embodiment of an angular rate sensor comprises a movable mass system flexibly coupled to a substrate, the movable mass system being configured to undergo oscillatory drive motion relative to a drive axis and a sense portion of the mass system being configured to undergo oscillatory sense motion relative to a sense axis that is perpendicular to the drive axis in response to an angular velocity about an input axis that is perpendicular to each of the drive and sense axes, and a quadrature compensation unit. The quadrature compensation unit includes a fixed electrode coupled to a substrate and lengthwise oriented in a first direction, the first direction being substantially parallel to the drive axis, the fixed electrode having a first edge, the first edge exhibiting a first stepped edge profile. The quadrature compensation unit further includes a movable electrode is coupled to a movable mass system, the movable electrode being lengthwise oriented in the first direction, the movable electrode having a second edge facing the first edge, the second edge exhibiting a second stepped edge profile, wherein when the movable mass system is not undergoing the oscillatory drive motion, a gap between the first and second edges has a varying width corresponding to the first and second stepped edge profiles, and wherein the gap has a first region exhibiting a first width and a second region exhibiting a second width, the second width being less than the first width. The quadrature compensation unit further includes a control circuit in electrical communication with the fixed electrode, the control circuit determining a magnitude of quadrature motion of a sense portion of the movable mass system in the second direction along the sense axis from the oscillatory drive motion in the first direction, and applying a corrective voltage to the fixed electrode to compensate for the quadrature motion.

Another embodiment of an angular rate sensor comprises a movable mass system flexibly coupled to a substrate, the movable mass system being configured to undergo oscillatory drive motion relative to a drive axis and the mass system being further configured to undergo oscillatory sense motion relative to a sense axis that is perpendicular to the drive axis in response to an angular velocity about an input axis that is perpendicular to each of the drive and sense axes, and a quadrature compensation unit. The quadrature compensation unit includes multiple fixed electrodes coupled to the substrate and lengthwise oriented in a first direction, the first direction being substantially parallel to the drive axis, the multiple fixed electrodes being laterally displaced away from one another in a second direction that is perpendicular to the first direction, the second direction being substantially parallel to the sense axis, each of the multiple fixed electrodes having at least one edge exhibiting a stepped edge profile. The quadrature compensation unit further includes multiple movable electrodes that are laterally displaced away from one another in the second direction, the multiple movable electrodes being positioned in alternating arrangement with the multiple fixed electrodes, each of the multiple movable electrodes having at least one edge exhibiting the stepped edge profile such that multiple gaps are formed between each of the fixed electrodes and each of the movable electrodes, each of the multiple gaps having a varying width corresponding to the stepped edge profile, wherein the multiple gaps have first regions exhibiting a first width and second regions exhibiting a second width, the second width being less than the first width, and wherein a first length of the first region exhibiting the first width varies in correspondence with the oscillatory drive motion and a second length of the second region exhibiting the second width varies in correspondence with the oscillatory drive motion.

The quadrature compensation unit enables an increase in the actuation density of the in-plane quadrature electrode through the implementation of nested electrodes having a stepped edge profile. The stepped edge profile of the side walls of fixed and movable electrodes enables the generation of linear quadrature force response in an area efficient form factor.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

**Claims**

1. A MEMS device comprising:

    a fixed electrode ($38$, $38_1$ - $38_4$) coupled to a substrate (28) and lengthwise oriented in a first direction (46), said fixed electrode ($38$, $38_1$ - $38_4$) having a first edge (74, 76), said first edge (74, 76) exhibiting a first stepped edge profile (78); and
    a movable electrode ($40$, $40_1$ - $40_6$) coupled to a movable mass system (26), said movable electrode ($40$, $40_1$ - $40_6$) being lengthwise oriented in said first direction (46), said movable mass system (26) and said movable electrode ($40$, $40_1$ - $40_6$) being configured to undergo oscillatory motion in said first direction (46), said movable electrode ($40$, $40_1$ - $40_6$) having a second edge (80, 82) facing said first edge (74, 76), said second edge (80, 82) exhibiting a second stepped edge profile (84), wherein when said movable electrode ($40$, $40_1$ - $40_6$) is not undergoing said oscillatory motion, a gap (48) between said first and second edges (74, 76, 80, 82) has a varying width corresponding to said first and second stepped edge profiles (78, 84).

2. The MEMS device of claim 1, wherein said fixed and movable electrodes ($38$, $38_1$ - $38_4$, $40$, $40_1$ - $40_6$) are laterally spaced apart from one another and oriented substantially parallel to a surface of said substrate (28).

3. The MEMS device of claim 1 or claim 2, wherein said gap (48) between said first edge (74, 76) and said second edge (80, 82) has a first region (86) exhibiting a first width (88) and a second region (90) exhibiting a second width (92), said second width (92) being less than said first width (88).

4. The MEMS device of claim 3, wherein a first length (94) of said first region (86) exhibiting said first width (88) varies in correspondence with said oscillatory motion, and a second length (96) of said second region (90) exhibiting said second width (92) varies in correspondence with said oscillatory motion.

5. The MEMS device of claim 3 or claim 4, wherein each of said first and second widths (88, 92) is no less than a minimum allowable spacing between said fixed and movable electrodes ($38$, $38_1$ - $38_4$, $40$, $40_1$ - $40_6$) such that said fixed and movable electrodes ($38$, $38_1$ - $38_4$, $40$, $40_1$ - $40_6$) are positioned in an immediately adjacent configuration with said gap (48) between them, said minimum allowable spacing being defined by a fabrication process used to form said fixed and movable electrodes ($38$, $38_1$ - $38_4$, $40$, $40_1$ - $40_6$).

6. The MEMS device of any preceding claim, wherein, said fixed electrode ($38$, $38_1$ - $38_4$) is a first fixed electrode ($38$, $38_1$ - $38_4$), said gap (48) is a first gap (48), and wherein:

    said movable electrode ($40$, $40_1$ - $40_6$) has a third edge (74, 76) opposing said second edge (80, 82); and
    said MEMS device further comprises a second fixed electrode ($38$, $38_1$ - $38_4$) coupled to said substrate (28) and lengthwise oriented in said first direction (46), said second fixed electrode ($38$, $38_1$ - $38_4$) having a fourth edge facing said third edge (74, 76) such that said movable electrode ($40$, $40_1$ - $40_6$) is interposed between said first and second fixed electrode ($38$, $38_1$ - $38_4$)s, wherein at least one of said third and fourth edges exhibits a third stepped edge profile (78) such that a second gap (48) between said third and fourth edges has a varying width corresponding to said third stepped edge profile (78).

7. The MEMS device of any preceding claim, wherein:

    said movable mass system (26) includes a movable body portion and an opening extends through said movable body portion;
    said fixed electrode ($38$, $38_1$ - $38_4$) resides in said opening; and

said movable electrode $(40, 40_1 - 40_6)$ is formed along an inner perimeter of said opening.

8. The MEMS device of claim 7, wherein said movable electrode $(40, 40_1 - 40_6)$ is a first movable electrode $(40, 40_1 - 40_6)$, said gap (48) is a first gap (48), and wherein

said MEMS device further comprises a second movable electrode $(40, 40_1 - 40_6)$ extending from said inner perimeter of said opening and lengthwise oriented in said first direction (46), said second movable electrode $(40, 40_1 - 40_6)$ having a third edge (74, 76) facing a fourth edge (80, 82) of said fixed electrode $(38, 38_1 - 38_4)$ such that said fixed electrode $(38, 38_1 - 38_4)$ is interposed between said first and second movable electrodes, wherein at least one of said third and fourth edges (74, 76, 80, 82) exhibits a third stepped edge profile (78) such that a second gap (48) between said third and fourth edges (74, 76, 80, 82) has a varying width corresponding to said third stepped edge profile (78).

9. The MEMS device of any preceding claim, wherein said fixed electrode $(38, 38_1 - 38_4)$ is a first fixed electrode $(38, 38_1 - 38_4)$, said movable electrode $(40, 40_1 - 40_6)$ is a first movable electrode $(40, 40_1 - 40_6)$, said gap (48) is a first gap (48), and said MEMS device further comprises:

an anchor structure (30) coupled to said substrate (28), said anchor structure having a first side and a second side opposing said first side, said first fixed electrode $(38, 38_1 - 38_4)$ extending from said first side;
a second fixed electrode $(38, 38_1 - 38_4)$ extending from said second side of said anchor structure and lengthwise oriented in said first direction (46);
a second movable electrode $(40, 40_1 - 40_6)$ coupled to said movable mass system (26), said second movable electrode $(40, 40_1 - 40_6)$ being lengthwise oriented in said first direction (46), said second movable electrode $(40, 40_1 - 40_6)$ having a third edge (74, 76) facing a fourth edge (80, 82) of said second fixed electrode $(38, 38_1 - 38_4)$, wherein at least one of said third and fourth edges (74, 76, 80, 82) exhibits a third stepped edge profile (84) such that a second gap (48) between said third and fourth edges (74, 76, 80, 82) has a varying width corresponding to said third stepped edge profile (84).

10. The MEMS device of any preceding claim, wherein:

said fixed electrode $(38, 38_1 - 38_4)$ is one of multiple fixed electrodes $(38, 38_1 - 38_4)$ that are laterally displaced away from one another in a second direction (50) that is perpendicular to said first direction (46), each of said multiple fixed electrodes $(38, 38_1 - 38_4)$ having at least one edge (74, 76) exhibiting a stepped edge profile (78);
said movable electrode $(40, 40_1 - 40_6)$ is one of multiple movable electrodes $(40, 40_1 - 40_6)$ that are laterally displaced away from one another in said second direction (50), said multiple movable electrodes $(40, 40_1 - 40_6)$ being positioned in alternating arrangement with said multiple fixed electrodes $(38, 38_1 - 38_4)$, each of said multiple movable electrodes $(40, 40_1 - 40_6)$ having at least one (80, 82) edge exhibiting said stepped edge profile (84) such that multiple gaps (48) are formed between said each of said fixed electrodes $(38, 38_1 - 38_4)$ and said each of said movable electrodes $(40, 40_1 - 40_6)$, each of said multiple gaps (48) having a varying width corresponding to said stepped edge profile.

11. The MEMS device of any preceding claim, wherein:

said movable mass system (26) is flexibly coupled to said substrate (28), said oscillatory motion includes oscillatory drive motion, said movable mass system (26) is configured to undergo said oscillatory drive motion relative to a drive axis (46) that is substantially parallel to said first direction (46) and a sense portion of said movable mass system (26) is configured to undergo oscillatory sense motion relative to a sense axis (50) that is substantially perpendicular to said drive axis (46) in response to an angular velocity about an input axis (56) that is perpendicular to each of said drive and sense axes (46, 50); and
said MEMS device further comprises a control circuit in electrical communication with said fixed electrode $(38, 38_1 - 38_4)$, said control circuit determining a magnitude of quadrature motion of said sense portion of said movable mass system (26) in said second direction (50) along said sense axis (50) from said oscillatory drive motion in said first direction (46), and applying a corrective voltage to said fixed electrode $(38, 38_1 - 38_4)$ to compensate for said quadrature motion.

12. The MEMS device of claim 11, comprising an angular rate sensor, wherein said fixed and movable electrodes $(38, 38_1 - 38_4, 40, 40_1 - 40_6)$ and said control circuit form a quadrature compensation unit for said angular rate sensor.

13. An angular rate sensor comprising:

a movable mass system (26) flexibly coupled to a substrate (28), said movable mass system (26) being configured to undergo oscillatory drive motion relative to a drive axis (46) and a sense portion of said mass system being configured to undergo oscillatory sense motion relative to a sense axis (50) that is perpendicular to said drive axis (46) in response to an angular velocity about an input axis (56) that is perpendicular to each of said drive and sense axes (46, 50); and
a quadrature compensation unit including:

a fixed electrode (38, $38_1$ - $38_4$) coupled to a substrate (28) and lengthwise oriented in a first direction (46), said first direction (46) being substantially parallel to said drive axis (46), said fixed electrode (38, $38_1$ - $38_4$) having a first edge (74, 76), said first edge (74, 76) exhibiting a first stepped edge profile (78);
a movable electrode (40, $40_1$ - $40_6$) coupled to a movable mass system (26), said movable electrode (40, $40_1$ - $40_6$) being lengthwise oriented in said first direction (46), said movable electrode (40, $40_1$ - $40_6$) having a second edge (80, 82) facing said first edge (74, 76), said second edge (80, 82) exhibiting a second stepped edge profile (84), wherein when said movable mass system (26) is not undergoing said oscillatory drive motion, a gap (48) between said first and second edges (74, 76, 80, 82) has a varying width corresponding to said first and second stepped edge profiles (78, 84), and wherein said gap (48) has a first region (86) exhibiting a first width (88) and a second region (90) exhibiting a second width (92), said second width (92) being less than said first width (88); and
a control circuit in electrical communication with said fixed electrode (38, $38_1$ - $38_4$), said control circuit determining a magnitude of quadrature motion of a sense portion of said movable mass system (26) in said second direction (50) along said sense axis (50) from said oscillatory drive motion in said first direction (46), and applying a corrective voltage to said fixed electrode (38, $38_1$ - $38_4$) to compensate for said quadrature motion.

14. The angular rate sensor of claim 13, wherein when said movable electrode (40, $40_1$ - $40_6$) undergoes said oscillatory drive motion with said movable mass system (26) in said first direction (46), a first length of said first region (86) in said first direction (46) exhibiting said first width (88) varies in correspondence with said oscillatory drive motion, and a second length of said second region (90) in said first direction (46) exhibiting said second width (92) varies in correspondence with said oscillatory drive motion.

15. The angular rate sensor of claim 14, wherein said corrective voltage applied via said control circuit at said second region (90) exhibiting said second width (92) generates a quadrature compensation force between said fixed and movable electrodes (38, $38_1$ - $38_4$, 40, $40_1$ - $40_6$).

# FIG. 1

# FIG . 2

SENSE   Y ⌐50

INPUT⌐           ⌐46

Z•  →X

⌐56       ⌐DRIVE

22

# FIG . 3

SENSE Y 50

INPUT 46

Z X

56 DRIVE

# FIG . 4